# EUROPEAN PATENT APPLICATION

(11) **EP 2 073 483 A1**
(43) Date of publication of application: **24.06.2009**
(21) Application number: 07123917.2
(22) Date of filing: 21.12.2007
(51) Int. Cl.: H04L 29/06

(54) **Method and apparatus for a fast mobile IP handover**

(71) Applicant: NTT DoCoMo, Inc., Tokyo (JP)
(72) Inventor: Zugenmaier, Alf, 81241, Munich (DE); Laganier, Julien, 81543, Munich (DE); Prasad, Anand R., 80689, Munich (DE); Bargh, Mortaza, 7523 XC, Enschede (NL); Zandbelt, Hans, 7523 XC, Enschede (NL); Hulsebosch, Bob, 7523 XC, Enschede (NL); Eertink, Henk, 7523 XC, Enschede (NL)
(74) Representative: Betten & Resch

(57) **Abstract**

A method for performing a fast handover of a mobile node from a previous access router to a new access router in a mobile IP network, said method comprising:
before actually detaching said mobile node from said previous access router and
before attaching it to said new access router, performing the following:
establishing a tunnel between said previous access router and said new access router, and
routing packets determined for said mobile node via said new access router and said previous access router until said mobile node performs a handoff from said previous access router.

## Description

### FIELD OF INVENTION

The present invention relates to a fast mobile IP handover, particularly to a handover support for Mobile Nodes with IPv6 connectivity moving from one network to another.

### BACKGROUND OF THE INVENTION

Mobile IPv6 enables a Mobile Node to maintain its connectivity to the Internet when moving from one Access Router to another, a process referred to as handover. During handover, there is a period during which the Mobile Node is unable to send or receive packets because of link switching delay and IP protocol operations. This handover latency and accompanying packet loss results from standard Mobile IPv6 procedures, namely movement detection, new Care of Address configuration, and Binding Update, and it is often unacceptable to real-time traffic such as Voice over IP. Reducing the handover latency could also be beneficial to non-real-time, throughput-sensitive applications as well. It is therefore desirable to improve handover latency due to Mobile IPv6 procedures so the mobile node perceives a virtually seamless handover.

Mobile IPv6 (see http://www.ietf.org/rfc/rfc3775.txt) addresses the mobility problem in general. Optimizations regarding the improvement of the handover latency so far are the Hierarchical Mobile IPv6 protocol HMIPv6 (see http:Hwww.ietf.org/rfc/rfc4140.txt) and the Fast Mobile Protocol FMIPv6 (see - http://www.ietf.org/rfc/rfc4068.txt)

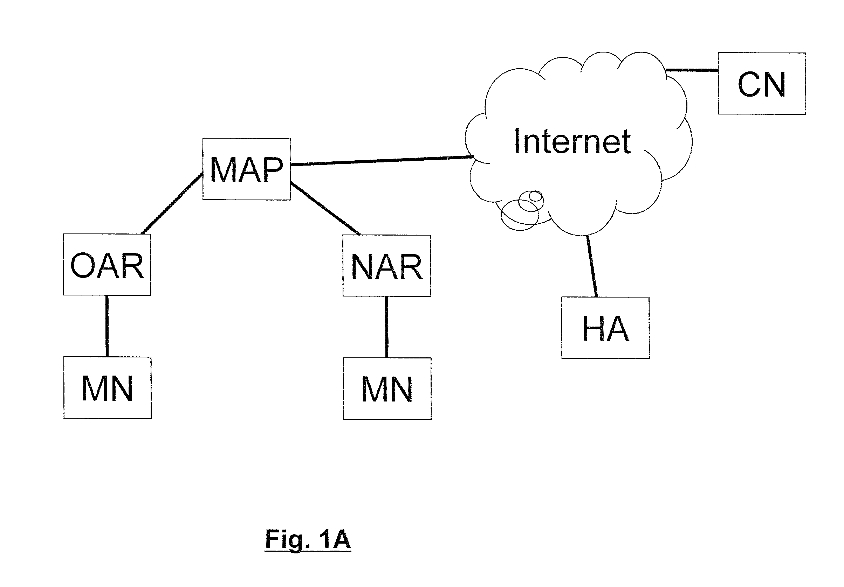

In the Hierarchical Mobile IPv6 protocol HMIP there is provided a mobility anchor point MAP in the network of the mobile node This MAP is a kind of a (local) home agent in the foreign access network In some sense it "hides" the handover to the correspondent nodes, and it diminishes the binding update latency after the handoff, because it makes not necessary a full round trip to the home agent and the correspondent node to perform the handover procedure. However, it does not help with avoiding to lose the packets sent to the old access router during handover. The scheme of the HMIP protocol is schematically illustrated in Fig. 1A. The mobile node MN moves from the old access router PAR to the new access router NAR, and due to the mobility anchor point MAP acting as kind of a local home agent this handover is "hidden" towards the "real" home agent of the mobile node.

In FMIPv6 there are two modes to establish a fast handover, the so-called predictive mode and the so-called reactive mode. In the predictive mode the mobile node is aware of the address of the new or next access router (NAR) before the actual handover takes place. The protocol enables a MN to attach quickly a new access router AR by providing the MN with new access router and the associated subnet prefix information while the MN is still connected to its current access(so called old access router OAR or previous access router PAR). For instance, an MN may discover available access points using link-layer specific mechanisms (i.e., a "scan" in WLAN) and then request subnet information corresponding to one or more of those discovered access points. The MN may do this after performing a RouterSolicitationProxy/proxyRouterAdvertisment exchange at any time while connected to its current router. The result of resolving an identifier associated with an access point is a [AP-ID, AR-Info] tuple, which an MN can use in readily detecting movement: when attachment to an access point with AP-ID takes place, the MN knows the corresponding new router's coordinates including its prefix, IP address, and L2 address. FMIPv6 uses "Router Solicitation for Proxy Advertisement (RtSoIPr)" and "Proxy Router Advertisement (PrRtAdv)" messages for aiding movement detection. Through the RtSoIPr and PrRtAdv messages, the MN also formulates a prospective new CoA (NCoA) when it is still present on the PAR's link, so that the latency due to new prefix discovery subsequent to handover is eliminated.

Furthermore, this prospective address can be used immediately after attaching to the new subnet link (i.e., NAR's link) when the MN has received a "Fast Binding Acknowledgment (FBack)" message prior to its movement If it moves without receiving an FBack, the MN can still start using NCoA after announcing its attachment through a "Fast Neighbor Advertisement (FNA)" message The NAR responds to FNA if the tentative address is already in use thereby reducing NCoA configuration latency.

To reduce the Binding Update latency, the protocol specifies a tunnel between the Previous CoA (PCoA) and the NCoA, An MN sends a "Fast Binding Update" message to its Previous Access Router to establish this tunnel. When feasible, the MN should send an FBU from OAR's link. Otherwise, it should be sent immediately after attachment to NAR has been detected (this is then the so-called "reactive mode"). As a result, PAR begins tunneling packets arriving for PCoA to NCoA. Such a tunnel remains active until the MN completes the Binding Update with its correspondents. In the opposite direction, the MN should reverse tunnel packets to PAR until it completes the Binding Update. PAR forwards the inner packet in the tunnel to its destination (i.e., to the MN's correspondent).

Therefore, one may say that according to FMIP there is established a tunnel between the PAR and the NAR, where in case of the "predictive mode" the MN is still connected to the PAR and packets are forwarded through the tunnel to the NAR where they are buffered, whereas in the reactive mode the tunnel is established after connection to the NAR and similarly inflight packets are forwarded from the PAR to the NAR until completion of the handover.

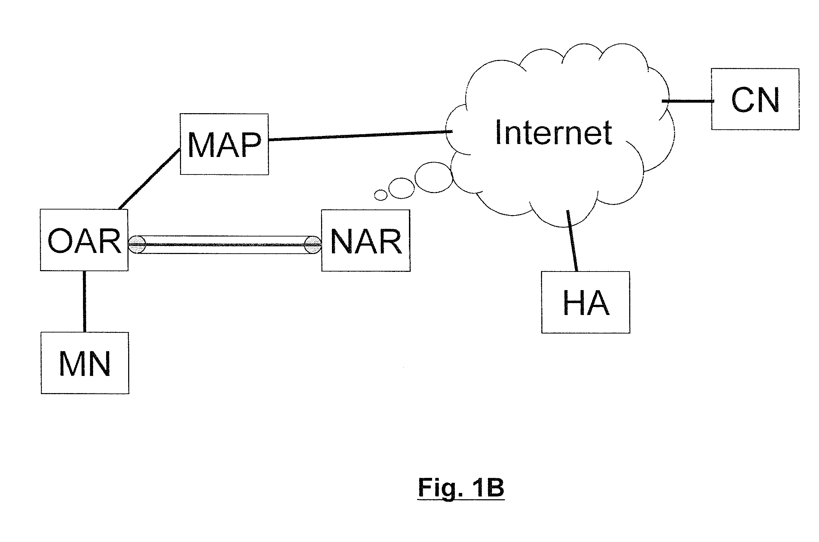

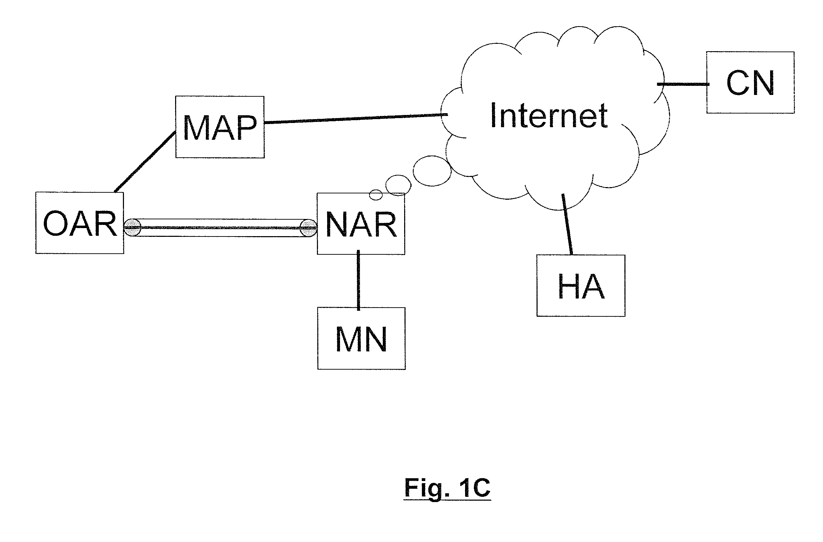

Fig. 1 B schematically illustrates the predictive mode in a state where the tunnel is established and packets are forwarded from OAR to NAR while the MN is still connected to the OAR. Fig. 1B illustrates FMIP in combination with HMIP. If HMIP is not employed, the MAP is removed. In predictive mode, both NAR and handover moment are predictable. Fig. 1C schematically illustrates the reactive mode in a state where after handoff the tunnel is established and packets are forwarded from PAR to NAR while the MN is already connected to the NAR. In reactive mode, both NAR and handover moment are unknown before handover. Fig 1C like Fig. 1B illustrates FMIP in combination with HMIP, If HMIP is not employed, the MAP is removed.

The methods of the prior art come along with several disadvantages For example, they have no provision for exploiting incomplete knowledge, for example, if the NAR is known, but the moment of handover isn't.

### SUMMARY OF THE INVENTION

According to one embodiment there is provided a method for performing a fast handover of a mobile node from a previous access router to a new access router in a mobile IP network, said method comprising:
before actually detaching said mobile node from said previous access router and
before attaching it to said new access router, performing the following:
   establishing a tunnel between said previous access router and said new access router, and
   routing packets sent to said mobile node via said new access router and said previous access router until said mobile node performs a handoff from said previous access router.

This allows the mobile node to receive packets sent to it via a route which comprises the correspondent node, from there to the new access router, from there to the old access router and then to the mobile node. The preparation of this route in some sense anticipates some steps necessary for the handover to the next access router and therefore reduces the corresponding latency while the mobile node is still being connected to the old access router.

According to one embodiment of said method, establishing said tunnel is performed such that said mobile node is addressable under a new care of address which is served by said new access router which then forwards incoming packets to said previous access router from where they are forwarded to the mobile node.

The new care of address may be formed with the network prefix of the new access router.

According to one embodiment packets directed to the correspondent node from the mobile node are forwarded to said correspondent node through reverse tunneling from said mobile node via said new access router and said old access router, or according to one embodiment the upstream data instead of using reverse tunneling may be sent directly upstream using the old route without the newly established tunnel.

This enables the communication also into the opposite direction from the mobile node towards the correspondent node.

According to one embodiment after detaching said mobile node from said previous access router packets arriving at said previous access router are buffered therein and retrieved therefrom after said mobile node has attached to said new access router.

This avoids the loss of packets after the actual handoff.

According to one embodiment the method further comprises:
sending a fast binding update message from said mobile node to said previous access router after said mobile node is aware of the address of said next access router;
establishing said tunnel between said previous access router and said new access router in response to said fast binding update message.

According to one embodiment said establishing of said tunnel between said previous access router and said new access router further comprises:
sending a binding update message from said mobile node to the home agent of said mobile node or to the correspondent node of said mobile node or to a mobility anchor point, before said mobile node detaches from said previous access router, thus enable the routing of messages from the correspondent node via said new access router to said previous access router

According to one embodiment said tunnel is used to forward packets to said previous access router until said mobile node has completed the handover procedure for its attachment at said new access router.

According to one embodiment there is provided an apparatus for performing a fast handover of a mobile node from a previous access router to a new access router in a mobile IP network, said apparatus comprising:
a module for, before actually detaching said mobile node from said previous access router and before attaching it to said new access router, performing the following:
   establishing a tunnel between said previous access router and said new access router, and
   routing packets sent to said mobile node via said new access router and said previous access router until said mobile node performs a handoff from said previous access router.

According to one embodiment an apparatus comprises:
a module for determining a new access router to which a handover is to be performed;
a module for sending a binding update message to inform the home agent or the correspondent node that future packets should be sent to a new care of address served by said new access router;
a module for receiving data from the correspondent node of said mobile node via said new access router and said previous access router until said mobile node attaches to said new access router.

In this manner a mobile node can be implemented which acts as an apparatus according to an embodiment of the invention

According to one embodiment an apparatus for performing a fast handover of a mobile node further comprises:
a correspondent node or a home agent of a mobile node, said correspondent node or a home agent of said mobile node forwarding data to said mobile node via said previous access router until it receives a binding update message from said mobile node, and said correspondent node or a home agent after having received said binding update message forwarding downstream packets sent to said mobile node to a care of address served by said new access router until said mobile node attaches to said new access router.

In this manner a correspondent node or a home agent of a mobile node can be implemented which acts as an apparatus according to an embodiment of the invention.

According to one embodiment an apparatus comprises:
an access router which has been determined as a new access router for a mobile node. This new access router, after having established a tunnel to the previous access router of said mobile node, serves the new care of address for packets sent to said mobile node from a home agent or a correspondent node of said mobile node. In this manner it forwards the packets to said mobile node via said previous access router until said mobile node attaches to said new access router.

In this manner a "new" access router can be implemented which acts as an apparatus according to an embodiment of the invention.

According to one embodiment an apparatus comprises:
an access router which acts as a previous access router for a mobile node. This previous access router, after having established a tunnel to a new access router of said mobile node to which a handover is to be performed, receives packets from said new access router which serves the new care of address for packets sent to said mobile node from a home agent or a correspondent node of said mobile node or from a mobility anchor point. In this manner it forwards the packets which it received via said tunnel from said new access router to said mobile node until said mobile node attaches to said new access router.

In this manner a "previous" access router can be implemented which acts as an apparatus according to an embodiment of the invention.

According to one embodiment the apparatus further comprises:
a module for performing a method according to one of the embodiments of the
invention.

According to one embodiment there is provided computer program comprising program code which when being executed on a computer enables said computer to carry out a method according to one of the embodiments of the invention

### DESCRIPTION OF THE DRAWINGS

Figs. 1A to 1C schematically illustrate methods for mobile IP handover according to the prior art.
Fig. 2A schematically illustrates a first part of a mobile IP handover according to an embodiment of the invention
Fig. 2B schematically illustrates a second part of a mobile IP handover according to an embodiment of the invention.
Fig. 3A schematically illustrates a sequence diagram of a mobile IP handover according to an embodiment of the invention without route optimization.
Fig. 3B schematically illustrates a sequence diagram of a mobile IP handover according to a further embodiment of the invention with route optimization.

### DETAILED DESCRIPTION

The present invention will in the following be described by means of exemplary embodiments. At first, however, some terms used in the following description are explained.
MN - Mobile Node
AR - Access Router
IP(v6) - Internet Protocol (version 6)
MIPv6 - Mobile Internet Protocol version 6
FMIPv6 - Fast Mobile Internet Protocol version 6
HMIPv6 - Hierarchical Mobile Internet Protocol version 6
RtSoIPr - Router Solicitation for Proxy Advertisement
PrRtAdv - Proxy Router Advertisement
NCoA - New Care-of-Address
PCoA- Previous Care-of-Address
PAR - Previous Access Router
OAR - old Access Router (=PAR)
NAR - new Access Router
FBU - Fast Binding Update
HI - Handover Initiate
HACK- Handover Acknowledgement

The method according to one embodiment of the invention basically follows the FMIPv6 strategy by building a tunnel between the old and the new Access Router. Contrary to the approach of FMIPv6, however, the tunnel is not used to forward packets which arrive at the old access router to the new access router, but rather instead it uses the new access router to receive the packets from the correspondent node and to then forward it to the old access router through the tunnel. Therefore the new address (served by the new access router) is actually used as the address to which the correspondent node forwards its packets, and the old access router is only reached through the tunnel and then the old access router forwards the packets received from the new access router further to the mobile node until it actually detaches from the old access router.

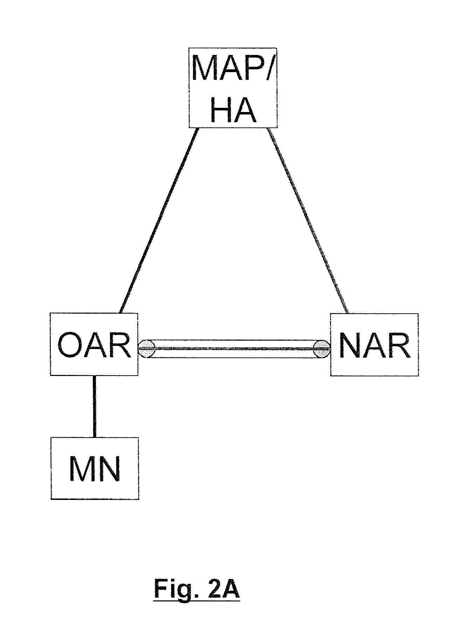

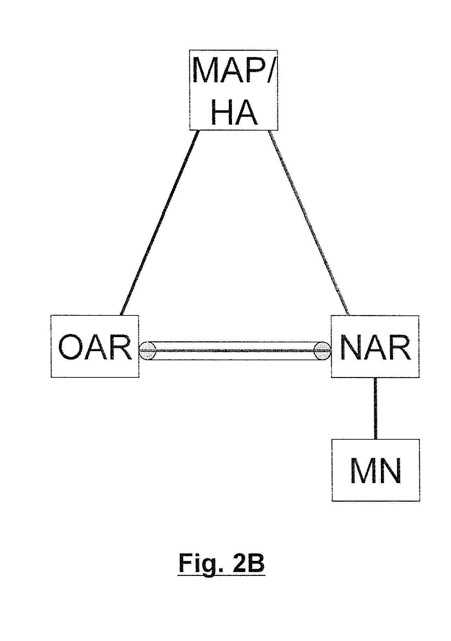

In other words, during the time when the MN is still connected to the PAR, the new Access Router forwards packets to the old Access Router (PAR) over a tunnel that is established between them. This is schematically illustrated in Fig. 2A. When the Mobile Node actually moves to the new network by disconnecting from the old one, no additional configuration on layer 3 (the IP or network layer) is needed since the new configuration was "pre-established" already. The situation after the move of the mobile node and before removing the tunnel is schematically illustrated in Fig. 2B. This solution has an advantage over FMIPv6 in its property that it can be preconfigured with the only knowing where the next handover will happen to, but not when it will happen. Additional advantages over MIPv6 are similar to the ones that FMIPv6 has, such as suitability for pre-authentication, pre-configuration and additional context transfer resulting in minimisation of packet loss and handover latency.

In the following a further embodiment of the invention will be described in somewhat more detail.
According to one embodiment the present invention provides a protocol which is equal to the Fast Mobile IPv6 protocol FMIPv6, up to the point where (through the RtSoIPr and PrRtAdv messages), the MN formulates a prospective new Care-of-Address (NCoA) when it is still present on the PAR's link. (Hence, the latency due to new prefix discovery subsequent to handover is eliminated). Now, in contrast to the FMIPv6 specification, this prospective address is used immediately on *the old subnet* link (i.e., PAR's link) after the MN has received a "Fast Binding Acknowledgment (FBack)" message prior to its movement.
To support usage of the NCoA on the PAR, the protocol specifies a tunnel between the PAR and the NAR that differs from the one in FMIPv6 as follows: a MN sends a FBU message to the PAR, to establish this tunnel. The establishment of the tunnel is then followed by a Binding Update to the Home Agent, possibly also to the correspondent(s) of the MN, depending on the embodiment According to one embodiment there is sent a binding update to the home agent to inform the home agent about the new care of address (using the prefix of the NAR) to be used when now addressing the mobile node. As a result, packets from correspondents end up in PAR, and NAR begins tunneling packets arriving for NCoA to PAR. Such a tunnel remains active until the MN completes the handover by attaching to the NAR. In the opposite direction, the MN preferably sends packets via the PAR until it completes the handover. The PAR then forwards the packet into the tunnel between PAR and NAR. The NAR then forwards the packet to its destination (i.e., to the MN's correspondent), where in an embodiment without route optimization it is sent via the HA. Such a reverse tunnel ensures that packets containing NCoA as a source IP address are not dropped by the PAR due to ingress filtering.

According to a further embodiment in which route optimization is used the signal flow is slightly different, as will be explained in the following. Route optimization allows any CN to send packets straight to the MN (and vice versa) without detour via the HA.

According to one embodiment using such route optimization the Binding Update message is not only sent to the HA but also to the correspondent node(s) CN of the MN. Then, similar to the previous embodiment, packets from correspondents end up in PAR, and NAR begins tunneling packets arriving for NCoA to PAR. Similar to the previous embodiment, in the opposite direction, the MN preferably sends packets via the PAR until it completes the handover. The PAR then forwards the packet into the tunnel between PAR and NAR. The NAR then forwards the packet to its destination (i.e. to the MN's correspondent), where due to the route optimization this is not done via the HA.

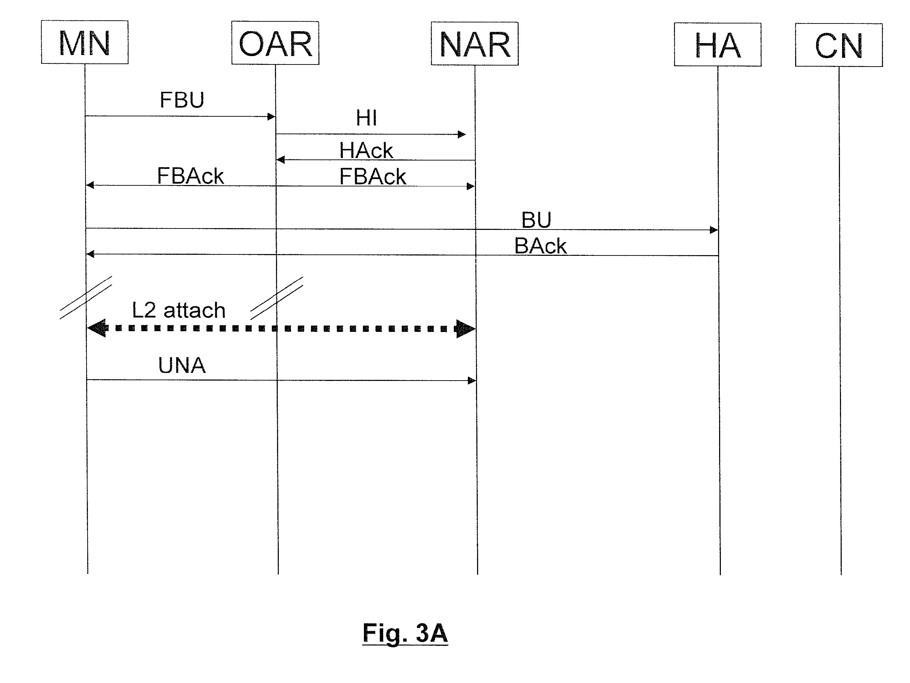

The protocol according to one embodiment will now be explained in connection with the sequence diagram shown in Fig. 3A.
Once the MN is aware of a prospective next access router (NAR) or of a handover being imminent to such an next access router, e.g. due to a decrease in signal quality or any other mechanism capable of predicting the handover to the NAR, the MN sends a fast binding update FBU to the PAR. The PAR then in order to inform the NAR sends a handover initiate message (HI) to the NAR which is acknowledged by the handover acknowledge message (HAck). The establishment of the tunnel between the PAR and the NAR then is completed by the Fast Binding Update Acknowledgement message FBAck sent from the NAR to the PAR. These messages so far are not different from FMIPv6.

Similarly to FMIPv6 there is built a tunnel between PAR and NAR; however, now there is being built a tunnel for forwarding packets from the (one or more) correspondent nodes to the PAR via the NAR. For that purpose the HA has to be informed about the NCoA which should be used in connection with the mobile node MN: This is achieved by the binding update message BU sent to the home agent HA It is acknowledged with the corresponding acknowledgement message BACK. The HA now is aware that future packets to the MN should be routed to the NCoA via the NAR from where they are sent via the tunnel to the PAR.

In this manner the tunnel for routing the packets from the correspondent node(s) via the new access router to the old access router can be established. Thereafter the packets may be forwarded from the CN (via the HA, in an embodiment without route optimization) to the PAR via the NAR, in other words, the MN is addressable on the new address (which may be formed with the network prefix of the NAR) through the old access router via the tunnel from the NAR to the PAR.

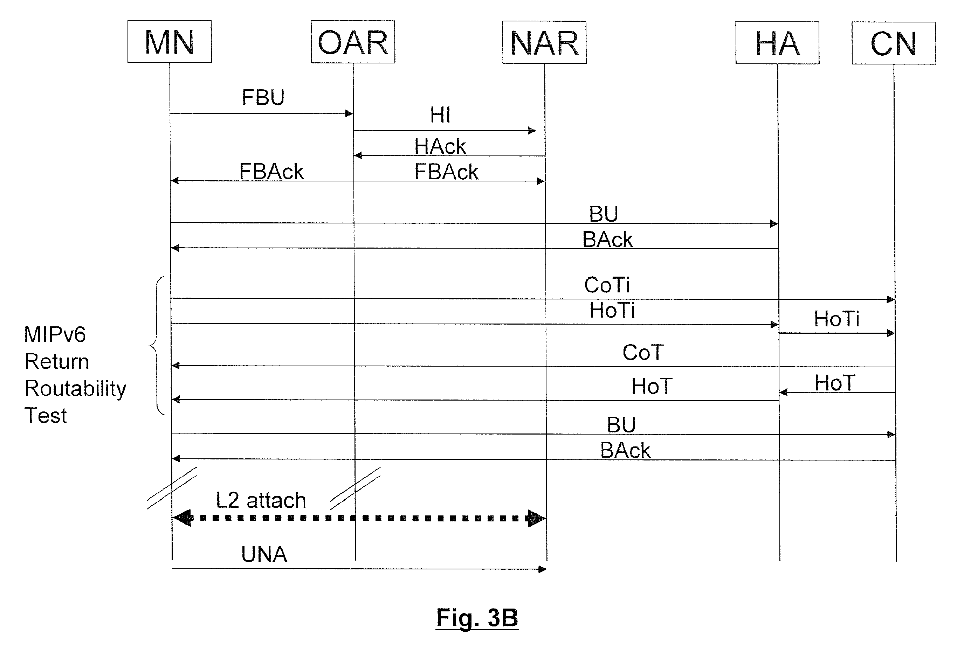

While Fig. 3A illustrates an embodiment without route optimization, in case of an embodiment where route optimization is in used, the signal flow is slightly different. This is schematically illustrated in Fig. 3B, in particular in the lower part of Fig. 3B which is labelled MIPv6 return routability test. Route optimization allows any CN to send packets straight to the MN without detour via the HA. The return routability test is performed to make sure a mobile node can really be reached at the care-of and home address it is claiming to be reachable at, as there is no preestablished security context between CN and MN (there is between MN and HA).
The return routability test is schematically illustrated in Fig. 3B and is similar to the one performed by a conventional MIPv6 procedure. It involves a Care of Address Test Init message CoTi and a Home Address Test Init Message HoTi, the first one followed by a Care of Address test message CoT and the latter followed by a Home Address test message HoT.
Finally a Binding update message BU is sent from the MN to the CN which is followed by a corresponding return of a binding acknowledgement message BAck

After exchange of these messages (the BU and BAck messages) the preparation for the rerouting of the downstream messages from CN to the PAR via the NAR has been completed and the downstream packets can actually be routed along this route similar to the previous embodiments.

Then the attachment of the mobile node at the level 2 (link layer) can be performed at the new access router to complete the actual handover.

According to one embodiment which uses HMIP the BU message is sent to the mobility anchor point MAP instead of being sent to the HA. Except for this the mechanism may operate as described in the embodiments before.

Similar to the prior art procedures in FMIPv6, according to one embodiment the mobile node MN announces its attachment to the new access router by sending a unsolicited neighbor advertisement message UNA to complete the hanover In this manner, the MN uses UNA to populate the neighbor cache of the NAR with its L2 address and gives indication that it has now moved. In this manner it then completes the handover.

After the MN has attached to the NAR the tunnel between the NAR and the PAR is not necessary anymore, and it may be torn down. According to one embodiment, during the time from the handoff of the MN from the PAR until its attachment to the NAR, the PAR buffers incoming packets which then are forwarded to the MN once it has attached to the NAR In this manner a packet loss can be avoided.

The procedure for establishing a tunnel may be performed in response to a predicted handover. It may be expected that prediction techniques for such handovers will improve in the future so that it may not happen too often that a predicted handover actually does not take place or is performed but with a different next access router than the one predicted. However, to take into account the fact that the prediction of the handover not necessarily will become true, the method for establishing a tunnel may establish such a tunnel for some predetermined time period (e.g. a minute or several minutes or a couple of seconds), and if after this time period the handover has not taken place, the tunnel is abandoned and communication returns to its normal path.

The embodiments of the invention described hereinbefore are similar to the FMIP predictive mode and the FMIP reactive mode, but still are significantly different from both of them. Like in the FMIP predictive mode, also in case of the embodiments of the invention the next location (the next access router) is predictable. However, the contrary to the predictive mode of FMIPv6 the actual loss of connectivity is not predictable, and therefore the optimization which is performed before the actual handoff is in some sense a "precautionary measure" to prepare for an imminent handover which actually may not take place in reality. For that purpose there is established the tunnel between the PAR and the NAR. But contrary to the FMIPv6 predictive mode the packet routing is not such that incoming packets (coming from the CN or the HA) arrive at the PAR and are forwarded via the tunnel to the NAR where they are buffered in FMIPv6. Instead the incoming packets (coming from the CN or the HA) directly arrive at the NAR and are forwarded via the tunnel of the PAR from where they are forwarded to the MN. By performing the establishment of the tunnel before the decision to actually make a handoff has been made (it may possibly never be made at all) the proposed method establishes a precautionary or preparatory tunnel which improves the handover latency in case the handover is actually to be performed.

The decision whether to establish such a precautionary tunnel between the PAR and the NAR to enable the MN to be addressable under the NCoA while still being attached to the PAR can be made on external parameters such as signal strength or any other parameter (such as QoS) which may influence the trigger of a handover. For that purpose any technology or module which provides a notification of loss of connectivity in advance may be used, e.g. any module which is based on one or more given parameters (such as signal strength or QoS) may decide that a handover is imminent. In such a case the tunnel may then be established as described to the predicted NAR. For predicting the NAR any location prediction technology may be used which may be provided by GSM, WCDMA, LTE or others.

The method of the embodiments of the invention therefore provides proactive early binding updates to improve the handover latency.

Compared with the reactive mode of FMIPv6 methods according to embodiments described have in common with the reactive mode that the loss of connectivity (the actual time when the handover will be performed) is not predictable. Contrary to the reactive mode, however, in case of the embodiments of the invention the optimization (the establishing of the tunnel) is performed before the actual handoff of the MN, while in the reactive mode it is performed after the handoff and even after attaching to the NAR.

The proposed embodiments therefore are in marked contrast to both options of FMIPv6, and still they provide a significant advantage over both of them. Compared to the predictive mode less information is necessary to set up the optimization, and compared to the reactive mode of FMIPv6, no packets are lost during the time needed for establishing the tunnel.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers, which are suitably programmed such as to act in accordance with the methods explained in connection with embodiments of the invention. An apparatus implementing an embodiment of the invention may e.g. comprise computing device or a mobile phone or any mobile device which is suitably programmed, such that it is able to carry out fast handover as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for performing a fast handover of a mobile node from a previous access router to a new access router in a mobile IP network, said method comprising:
before actually detaching said mobile node from said previous access router and before attaching it to said new access router, performing the following:
establishing a tunnel between said previous access router and said new access router, and
routing packets sent to said mobile node via said new access router and said previous access router until said mobile node performs a handoff from said previous access router.

2. The method of claim 1, wherein
establishing said tunnel is performed such that said mobile node is addressable under a new care of address which is served by said new access router which then forwards incoming packets to said previous access router from where they are forwarded to the mobile node.

3. The method of claim 1 or 2, wherein
packets directed to the correspondent node from the mobile node are forwarded to said correspondent node through reverse tunneling from said mobile node via said new access router and said old access router or
the upstream data instead of using reverse tunneling may be sent directly upstream using the old route without the newly established tunnel.

4. The method of one of claims 1 to 3, wherein
after detaching said mobile node from said previous access router packets arriving at said previous access router are buffered therein and retrieved therefrom after said mobile node has attached to said new access router.

5. The method of one of claims 1 to 4, further comprising:
sending a fast binding update message from said mobile node to said previous access router after said mobile node is aware of the address of said next access router;
establishing said tunnel between said previous access router and said new access router in response to said fast binding update message.

6. The method of one of the preceding claims, wherein said establishing of said tunnel between said previous access router and said new access router further comprises:
sending a binding update message from said mobile node to the home agent of said mobile node or to the correspondent node of said mobile node or to a mobility anchor point before said mobile node detaches from said previous access router to enable the routing of messages from the correspondent node via said new access router to said previous access router.

7. The method of one of the preceding claims, wherein said tunnel is used to forward packets to said previous access router until said mobile node has completed the handover procedure for its attachment at said new access router.

8. An apparatus for performing a fast handover of a mobile node from a previous access router to a new access router in a mobile IP network, said apparatus comprising:
a module for, before actually detaching said mobile node from said previous access router and before attaching it to said new access router, performing the following:
establishing a tunnel between said previous access router and said new access router, and
routing packets sent to said mobile node via said new access router and said previous access router until said mobile node performs a handoff from said previous access router.

9. An apparatus comprising:
a module for determining a new access router to which a handover is to be performed;
a module for sending a binding update message to inform the home agent or the correspondent node that future packets should be sent to a new care of address served by said new access router;
a module for receiving data from the correspondent node of said mobile node via said new access router and said previous access router until said mobile node attaches to said new access router.

10. An apparatus comprising:
an access router which has been determined as a new access router for a mobile node, said new access router after having established a tunnel to the previous access router of said mobile node, serving a care of address for packets sent to said mobile node from a home agent or a correspondent node of said mobile node to forward said packets to said mobile node via said previous access router until said mobile node attaches to said new access router

11. An apparatus comprising:
an access router which acts as a previous access router for a mobile node and which, after having established a tunnel to a new access router of said mobile node to which a handover is to be performed, receives packets from said new access router which serves the new care of address for packets sent to said mobile node from a home agent or a correspondent node or from a mobility anchor point of said mobile node and forwards the packets which it received via said tunnel from said new access router to said mobile node until said mobile node attaches to said new access router.

12. An apparatus according to one of claims 8 to 11, further comprising:
a correspondent node or a home agent of a mobile node, said correspondent node or a home agent of said mobile node forwarding data to said mobile node via said previous access router until it receives a binding update message from said mobile node, and said correspondent node or a home agent after having received said binding update message forwarding downstream packets sent to said mobile node to a care of address served by said new access router until said mobile node attaches to said new access router.

13. The apparatus of claim 8 further comprising:
features of one or more of claims 9, 10, 11, or 12; and/or
one or more modules for performing a method according to one of claims 2 to 7.

14. A computer program comprising program code which when being executed on a computer enables said computer to carry out a method according to one of claims 1 to 7.

## Amended claims

### Amended claims in accordance with Rule 137(2) EPC.

**1.** A method for performing a fast handover of a mobile node from a previous access router to a new access router in a mobile IP network, said method comprising:
before actually detaching said mobile node from said previous access router and before attaching it to said new access router, performing the following:
establishing a tunnel between said previous access router and said new access router, and
routing packets sent to said mobile node via said new access router and said previous access router until said mobile node performs a handoff from said previous access router.

**2.** The method of claim 1, wherein
establishing said tunnel is performed such that said mobile node is addressable under a new care of address which is served by said new access router which then forwards incoming packets to said previous access router from where they are forwarded to the mobile node.

**3.** The method of claim 1 or 2, wherein
packets directed to the correspondent node from the mobile node are forwarded to said correspondent node through reverse tunneling from said mobile node via said new access router and said old access router or
the upstream data instead of using reverse tunneling may be sent directly upstream using the old route without the newly established tunnel.

**4.** The method of one of claims 1 to 3, wherein
after detaching said mobile node from said previous access router packets arriving at said previous access router are buffered therein and retrieved therefrom after said mobile node has attached to said new access router.

**5.** The method of one of claims 1 to 4, further comprising:
sending a fast binding update message from said mobile node to said previous access router after said mobile node is aware of the address of said next access router;
establishing said tunnel between said previous access router and said new access router in response to said fast binding update message.

**6.** The method of one of the preceding claims, wherein said establishing of said tunnel between said previous access router and said new access router further comprises:
sending a binding update message from said mobile node to the home agent of said mobile node or to the correspondent node of said mobile node or to a mobility anchor point before said mobile node detaches from said previous access router to enable the routing of messages from the correspondent node via said new access router to said previous access router.

**7.** The method of one of the preceding claims, wherein said tunnel is used to forward packets to said previous access router until said mobile node has completed the handover procedure for its attachment at said new access router.

**8.** An apparatus for performing a fast handover of a mobile node from a previous access router to a new access router in a mobile IP network, said apparatus comprising:
a module for, before actually detaching said mobile node from said previous access router and before attaching it to said new access router, performing the following:
establishing a tunnel between said previous access router and said new access router, and
routing packets sent to said mobile node via said new access router and said previous access router until said mobile node performs a handoff from said previous access router.

**9.** An apparatus, said aparatus being a mobile node and comprising:
a module adapted for determining a new access router to which a handover of said mobile node is to be performed;
a module adapted for sending a binding update message to inform the home agent or the correspondent node of said mobile node that future packets should be sent to a new care of address served by said new access router;
a module adapted for receiving data from the correspondent node of said mobile node via a tunnel established between said new access router and said previous access router until said mobile node performs a handoff from said previous access router.

**10.** An apparatus comprising:
an access router which has been determined as a new access router for a mobile node, said new access router being adapted such that after having established a tunnel to the previous access router of said mobile node, is operable to serving a care of address for packets sent to said mobile node from a home agent or a correspondent node of said mobile node to forward said packets to said mobile node via said previous access router until said mobile node performs a handoff from said previous access router.

**11.** An apparatus comprising:
an access router which acts as a previous access router for a mobile node and which is adapted such that, after having established a tunnel to a new access router of said mobile node to which a handover is to be performed, is operable to receives packets from said new access router which serves the new care of address for packets sent to said mobile node from a home agent or a correspondent node or from a mobility anchor point of said mobile node and forwards the packets which it received via said tunnel from said new access router to said mobile node until said mobile node performs a handoff from said previous access router.

**12.** An apparatus according to one of claims 8 to 11, further comprising:
a correspondent node or a home agent of a mobile node, said correspondent node or a home agent of said mobile node being adapted to forward data to said mobile node via said previous access router until it receives a binding update message from said mobile node, and said correspondent node or a home agent after having received said binding update message forwarding downstream packets sent to said mobile node to a care of address served by said new access router until said mobile node attaches to said new access router.

**13.** The apparatus of claim 8 further comprising:
features of one or more of claims 9, 10, 11, or 12.

**14.** The apparatus of claim 8 further comprising:
one or more modules for performing a method according to one of claims 2 to 7.

**15.** A computer program comprising program code which when being executed on a computer enables said computer to carry out a method according to one of claims 1 to 7.
